# NEUE EUROPÄISCHE PATENTSCHRIFT

(11) **EP 2 147 233 B2**
(45) Veröffentlichungstag und Bekanntmachung des Hinweises auf die Entscheidung über den Einspruch: **29.07.2015**
(45) Hinweis auf die Patenterteilung: 14.09.2011
(21) Anmeldenummer: 08734969.2
(22) Anmeldetag: 02.04.2008
(51) Int. Cl.: F16H 57/02

(54) **GEHÄUSE FÜR EIN GETRIEBE, GETRIEBE, VERFAHREN UND GETRIEBE-BAUREIHE**
HOUSING FOR A GEARBOX, GEARBOX, METHOD, AND GEARBOX SERIES
CARTER POUR BOÎTE DE VITESSES, BOÎTE DE VITESSES, PROCEDE ET GAMME DE BOÎTES DE VITESSES

(30) Priorität: 13.04.2007 DE 102007017883; 15.01.2008 DE 102008004337
(43) Veröffentlichungstag der Anmeldung: 27.01.2010
(73) Patentinhaber: SEW-EURODRIVE GmbH & Co. KG, 76646 Bruchsal (DE)
(72) Erfinder: MEGERLE, Jürgen, 76694 Forst (DE); TEGELTIJA, Miki, 76646 Bruchsal (DE)
(74) Vertreter: Tüngler, Eberhard
(86) Internationale Anmeldenummer: PCT/EP2008/002626
(87) Internationale Veröffentlichungsnummer: WO 2008/125219

(56) Entgegenhaltungen:
- EP-A- 1 610 031
- DE-C- 818 716
- DE-C1- 4 227 512
- DE-U- 6 909 020
- US-A- 3 348 430
- US-A- 4 108 021
- US-B1- 6 202 507

## Beschreibung

Die Erfindung betrifft ein Gehäuse für ein Getriebe und eine Getriebe-Baureihe.

Aus der US 4108 021 A ist ein Übertragungsgehäuse für ein Fahrzeuggetriebe bekannt, welches aus zwei identischen Gehäuseschalen zusammengesetzt ist. Ebenso zeigen die EP 1 610 031 A2, die US 6 202 507 B1, die US 3 348 430 A, die DE 69 09 020 U und die DE 818 716 C jeweils Getriebe, bei welchen zwei identische Gehäusehälften zusammengesetzt sind. Eine weitere Variante, welche eine der Gehäusehäften mit einer gewichtsreduzierten Gehäusehälfte kombiniert, wird jedoch mit keiner der bekannten Gehäusehälften gebildet

Aus der DE 818 716 ist es bekannt, zweiteilige Getriebegehäuse vor dem Bohren von Lagerbohrungen zusammenzuspannen und nach der Montage der Lager mit Durchgangsschrauben fest zu verbinden.

Der Erfindung liegt die Aufgabe zugrunde, eine Getriebe-Baureihe weiterzubilden unter Reduzierung der Fertigungskosten.

Erfindungsgemäß wird die Aufgabe bei dem Gehäuse für ein Getriebe nach den in Anspruch 1 und bei der Getriebe-Baureihe nach den in Anspruch 8 angegebenen Merkmalen gelöst.

Die EP-A-1 610 031 A2 offenbart ein Gehäuse mit den vorhennzeichnenden merkmale des Anspruchs 1.

Wichtige Merkmale der Erfindung bei dem Gehäuse für ein Getriebe sind in Anspruch 1 angegeben. Erfindungsgemäß ist vorgesehen, dass eine erste und eine zweite gehäusebildende Schale und eine Schnittstelle zur Verbindung der Schalen umfasst sind, wobei die an der ersten gehäusebildenden Schale ausgebildeten Merkmale der Schnittstelle, insbesondere Bohrlöcher, Berührflächen und Zentrierhilfen, identisch ausgeformt sind zu den an der zweiten gehäusebildenden Schale ausgebildeten Merkmalen der Schnittstelle, so dass die erste gehäusebildende Schale mit einer Kopie der ersten gehäusebildenden Schale über die Schnittstelle verbindbar ist. Von Vorteil ist dabei, dass eine Baureihe mit mindestens zwei Varianten von zweischaligen Getrieben aus einem Baukasten mit zwei Gehäuseschalen bildbar ist. Somit ist die Teilezahl des Baukastens minimal, und es werden vorteilhaft Fertigungskosten sowie die Aufwendungen für Logistik verringert.

Bei einer vorteilhaften Ausgestaltung weist die untere Gehäuseschale Fußflansche und Befestigungsbohrlöcher zur Montage des Getriebes auf einer Unterlage aufweist. Somit ist das Getriebegehäuse sicher und stabil auf einer Unterlage montierbar.

Bei einer vorteilhaften Ausgestaltung ist eine Kegelradstufe vorgesehen, wobei Teilbereiche der Lagerbohrung für die Kegelradwelle in beiden Gehäuseschalen vorgesehen sind. Insbesondere ist eine Ölfangtasche in der unteren Gehäuseschale. vorgesehen, insbesondere einstückig mit ihr ausgeformt. Von Vorteil ist dabei, dass das Wellenlager der Kegelradstufe versorgbar ist von über die Ölfangtasche aus dem Innenraum des Getriebes aufgefangenem Öl. Somit ist ein kostengünstiges Schmierungssystem bereitgestellt.

Bei einer vorteilhaften Ausgestaltung sind Ölfangtaschen in den Gehäuseschalen derart vorgesehen, dass die jeweiligen Auffangöffnungen voneinander weg weisen. Von Vorteil ist dabei, dass Ölfangtaschen im Gießfahren ausbildbar sind und obere und unteren Gehäuseschale aus identischen Gusskörpern, also Urformen, fertigbar sind.

Bei einer vorteilhaften Ausgestaltung weist die untere Gehäuseschale eine quaderförmige Außenform auf und die obere Gehäuseschale eine Außenform, die aus der unteren Gehäuseschale durch Wegschneiden von Kanten entsteht. Von Vorteil ist dabei, dass ein Getriebegehäuse bereitgestellt ist mit einer stabilen Montagemöglichkeit auf einer Unterlage und einer reduzierten Gesamtmasse.

Bei einer vorteilhaften Ausgestaltung sind Lageraufdickungen zur Verstärkung der Wellenlagerbohrungen vorgesehen. Von Vorteil ist dabei, dass die Wanddicke der Gehäuseschalen verringerbar ist bei gleichbleibender Belastbarkeit. Somit ist der Materialeinsatz verringerbar.

Bei einer vorteilhaften Ausgestaltung weisen die Lageraufdickungen in das Getriebeinnere. Von Vorteil ist dabei, dass ein kompaktes Getriebegehäuse bereitgestellt ist.

Bei einer vorteilhaften Ausgestaltung weist die obere Gehäuseschale auf der Innenseite Verstärkungsrippen auf, die von den Lageraufdickungen weg verlaufen. Somit sind Querkräfte von den Wellenlagern in den Wellenbohrungen der Lageraufdickungen ableitbar, und die erforderliche Wandstärke für die Gehäuseschalen ist verringerbar.

Bei einer vorteilhaften Ausgestaltung weisen obere und untere Gehäuseschalen identische Zentriermittel auf, wobei die Zentrierung durch Zwischenteile und/oder weitere Zentriermittel vorgesehen ist. Somit sind obere und untere Gehäuseschale identisch ausbildbar und es sind gleichzeitig Zentriermittel vorsehbar, die eine Verformung der Gehäuseschalen insbesondere durch innere Materialspannungen nach Einbringen der Wellenbohrungen vermeiden oder unwirksam machen.

Bei einer vorteilhaften Ausgestaltung sind in der Berührfläche in der oberen Gehäuseschale und in der unteren Gehäuseschale Stiftbohrungen vorgesehen und mit der unteren Gehäuseschale durch Zentrierstifte verbunden, die über eine Presspassung in den Stiftbohrungen sitzen. Somit sind vorteilhaft einfache und besonders genaue Zentriermittel bereitgestellt.

Bei einer vorteilhaften Ausgestaltung ist die obere Gehäuseschale mit der unteren Gehäuseschale durch Gewindebolzen verbunden, wobei jeder Gewindebolzen durch eine Bohrung in der unteren Gehäuseschale geführt ist und in ein Sackloch der oberen Gehäuseschale eingeschraubt ist. Somit sind die Gehäuseschalen dicht und lösbar verbindbar, und es ist ein Eindringen von Flüssigkeiten in die Bohrungen der Gewindebolzen und somit unerwünschte Korrosion vermeidbar.

Bei einer vorteilhaften Ausgestaltung weist die obere Gehäuseschale eine Anschlussleiste für einen Ölkühler und/oder einen Ölfilter und/oder eine Lüfterhaube auf. Somit sind vorteilhaft zusätzliche Optionen in der Baureihe von Getriebegehäusen bereitstellbar.

Ein erfindungsgemäßes Gehäuse ist mit Vorteil bei einem Getriebe mit wenigstens einer Getriebestufe einsetzbar, bei dem es die wenigstens eine Getriebestufe aufnimmt, also gehäusebildend umgibt.

Wichtige Merkmale der Erfindung einer Getriebe-Baureihe, umfassend Varianten, die jeweils ein Gehäuse aufweisen, sind in Anspruch 8 angegeben. Es ist vorgesehen, dass in einer ersten Variante das Gehäuse aus zwei Gehäuseschalen zusammengesetzt ist, die aus identischen Gussteilen gefertigt sind, insbesondere durch Bohrbeärbeitung, und in einer zweiten Variante das Gehäuse aus einer Gehäuseunterschale als untere Gehäuseschale und einer Gehäuseoberschale als obere Gehäuseschale zusammengesetzt ist, wobei die Gehäuseunterschale aus einem zum Gussteil der Gehäuseschale der ersten Variante identischen Gussteil gefertigt ist und die Gehäuseoberschale aus einem Gussteil gefertigt ist, das eine gegenüber dem Gussteil der ersten Variante verringerte Masse aufweist. Von Vorteil ist dabei, dass eine Baureihe von Getrieben mit mindestens einer stabilen und einer massereduzierten Variante bereitgestellt ist, die einen Baukasten mit einer minimalen Teilezahl verwendet.

Bei einer vorteilhaften Ausgestaltung ist die Massenreduktion durch eine dünnere Wandstärke der Gehäuseoberschale gegenüber der Wandstärke der Gehäuseunterschale bewirkt und/oder durch eine verkleinerte äußere Oberfläche der oberen Gehäuseschale gegenüber der äußeren Oberfläche der unteren Gehäuseschale. Von Vorteil ist dabei, dass die Baureihe kostengünstig im Gussverfahren herstellbar ist.

Bei einer vorteilhaften Ausgestaltung sind in jeder Variante in der oberen Gehäuseschale Sacklöcher für Verbindungsbolzen eingebracht und es sind in der unteren Gehäuseschale durchgehende Bohrlöcher vorgesehen zur Durchführung der Verbindungsbolzen. Von Vorteil ist dabei, dass die Verbindungsbolzen gegen eindringende Feuchtigkeit geschützt sind zur Vermeidung von Korrosion.

Bei einer vorteilhaften Ausgestaltung ist in einer dritten Variante das Gehäuse aus zwei Gehäuseschalen zusammengesetzt, die aus identischen Gussteilen gefertigt sind, insbesondere durch Bohrbearbeitung, wobei die Gussteile identisch zum Gussteil der Gehäuseoberschale der zweiten Variante sind. Die Bohrbearbeitung betrifft insbesondere das Einbringen von Führungs- und Aufnahmelöchern für Verbindungsbolzen und Verbindungsschrauben, welche die Gehäuseteile zusammenhalten und fixieren. Die Bohrbearbeitung kann auch das Einbringen, also beispielsweise Ausfräsen, von Wartungsöffnungen betreffen, die je nach Einbaulage und Kundenwunsch anzubringen sind. Mit der dritten Variante ist eine besonders leichte, also wegen geringen Materialeinsatzes auch kostengünstige, und raumsparende Variante bereitgestellt, die insbesondere dann einsetzbar ist, wenn die Befestigung des Getriebes an einem Rahmen oder auf einer Unterlage keine übermäßig großen Kräfte aufnehmen muss.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1: Getriebegehäuse
- 2: Gehäuseschale
- 3: Gehäuseschale
- 4: Bohrlochfläche
- 5: Ölablassbohrung
- 6: Sackloch
- 7: Öldurchführung
- 8: Öldurchführung
- 9: Sauganschluss
- 10: Druckanschluss
- 11: Lagerbohrung
- 20: Kegelradwellenbohrung
- 21: Flanschfläche
- 22: Fußflansch
- 23: Befestigungsbohrloch
- 30: Gehäuseoberschale
- 31: Flanschfläche
- 32: Anschlussleiste
- 33: Inspektionsöffnung
- 34: Montagefläche
- 35: Montagefläche
- 36: Tasche
- 37: Getriebegehäuse
- 40: Ölfangtasche
- 41: Verbindungsflansch
- 42: Lageraufdickung
- 43: Taschenrückwand
- 50: Schnittstelle
- 51: Druckanschluss
- 52: Sauganschluss
- 53: Ausnehmung
- 54: Ölrücklaufbohrung
- 60: Ölfangtasche
- 61: Verstärkungsrippe
- 62: Verstärkungsrippe
- 63: Verstärkungsrippe
- 64: Verstärkungsrippe
- 65: Lageraufdickung
- 66: Öleinlass
- 67: Stiftbohrung
- 68: Bolzenbohrung
- 69: Verbindungsfläche
- 70: Schnittstelle
- 71: abgeschnittene Kante
- 72: Ohr
- 73: konvexer Knick
- 74: Bereich erster Wandstärke
- 75: Bereich zweiter Wandstärke
- 80: abgeschnittene Kante
- 81: konvexer Knick

Die Erfindung wird nun anhand von Abbildungen näher erläutert:

Es zeigt
- Figur 1 ein zweischaliges Getriebegehäuse,
- Figur 2 eine weitere Ansicht des zweischaligen Getriebegehäuses aus Figur 1,
- Figur 3 ein weiteres zweischaliges Getriebegehäuse,
- Figur 4 eine teilweise aufgeschnittene Ansicht des Getriebegehäuses aus Figur 1,
- Figur 5 einen Schnitt durch das Getriebegehäuse aus Figur 1,
- Figur 6 eine teilweise aufgeschnittene Ansicht des Getriebegehäuses aus Figur 3,
- Figur 7 einen Schnitt durch das Getriebegehäuse aus Figur 3,
- Figur 8 eine Seitenansicht des Getriebegehäuses aus Figur 3.

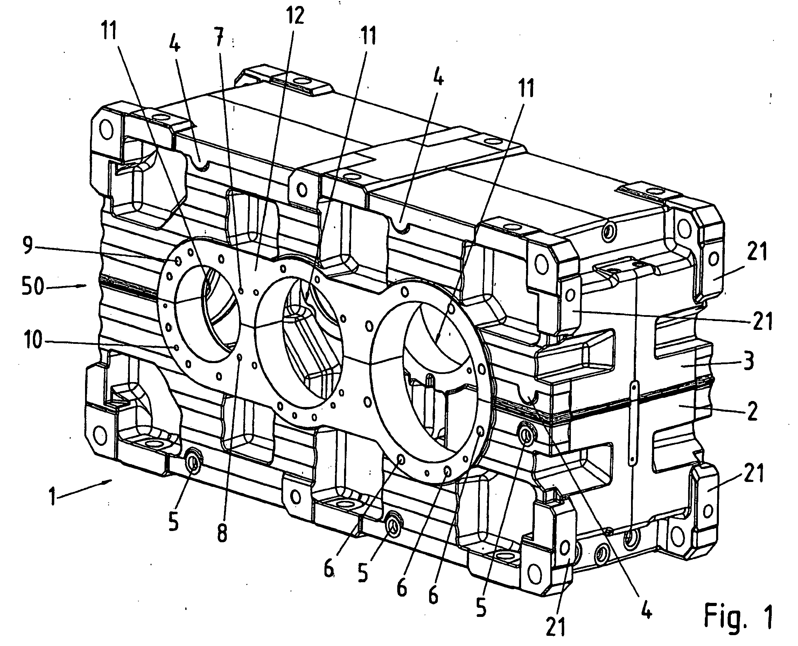

In Figur 1 ist ein erfindungsgemäßes zweischaliges Getriebegehäuse 1 gezeigt. Das Getriebegehäuse 1 ist aus einer unteren Gehäuseschale 2 und aus einer oberen Gehäuseschale 3 zusammengesetzt, wobei sich die Gehäuseschalen an Berührflächen 50 berühren. Die Begriffe oben und unten beziehen sich hierbei auf die Ausrichtung des Getriebes im Schwerefeld der Erde und fallen bei dem Getriebegehäuse 1 der Figur 1 mit der Orientierung der Figur 1 zusammen.

In das Getriebegehäuse 1 sind Lagerbohrungen 11 eingebracht, wobei ein Teilbereich jeder Lagerbohrung 11 in der oberen Gehäuseschale 3 vorgesehen ist, und ein weiterer Teilbereich derselben Lagerbohrung jeweils in der unteren Gehäuseschale 2 vorgesehen ist.

Die Gehäuseschalen 2 und 3 sind aus identischen Gussteilen, also Gusskörpern oder Urformen, durch spanende Bearbeitungsverfahren wie Bohren, Schneiden, Fräsen gefertigt.

Jede Gehäuseschale 2, 3 weist eine quaderförmige Außenkontur auf, so dass das Getriebegehäuse 1 insgesamt eine Quaderform aufweist.

Die Gehäuseschalen 2, 3 weisen Dichtungsflächen 12 auf, auf die Lagerdeckel aufsetzbar sind zum Abschluss der Wellenlager in den Lagerbohrungen 11. In die Dichtungsflächen 12 sind Sacklöcher 6 eingebracht zur Befestigung der Lagerdeckel.

Die untere Gehäuseschale 2 und die obere Gehäuseschale 3 sind aus identischen Gusskörpern gefertigt. Insbesondere stimmen beide Gehäuseschalen in ihrer Außenform überein und unterscheiden sich durch nachträglich eingebrachte Bohrungen.

In die untere Gehäuseschale 2 wurden Ölablassbohrungen 5 eingebracht. Die obere Gehäuseschale 3 weist Bohrlochflächen 4 auf, in die keine Ölablassbohrungen eingebracht wurden, da aufgrund der Verwendung als obere Gehäuseschale Ölablassbohrungen überflüssig sind.

In die untere Gehäuseschale 2 sind Öldurchführungen 8 und ein Druckanschluss 10 für den Anschluss einer Wellenendpumpe eingebracht.

In die obere Gehäuseschale 3 sind Öldurchführungen 7 sowie ein Sauganschluss 9 für den Anschluss einer Wellenendpumpe eingebracht. Der Sauganschluss 9 weist einen größeren Durchmesser auf als der Druckanschluss 10.

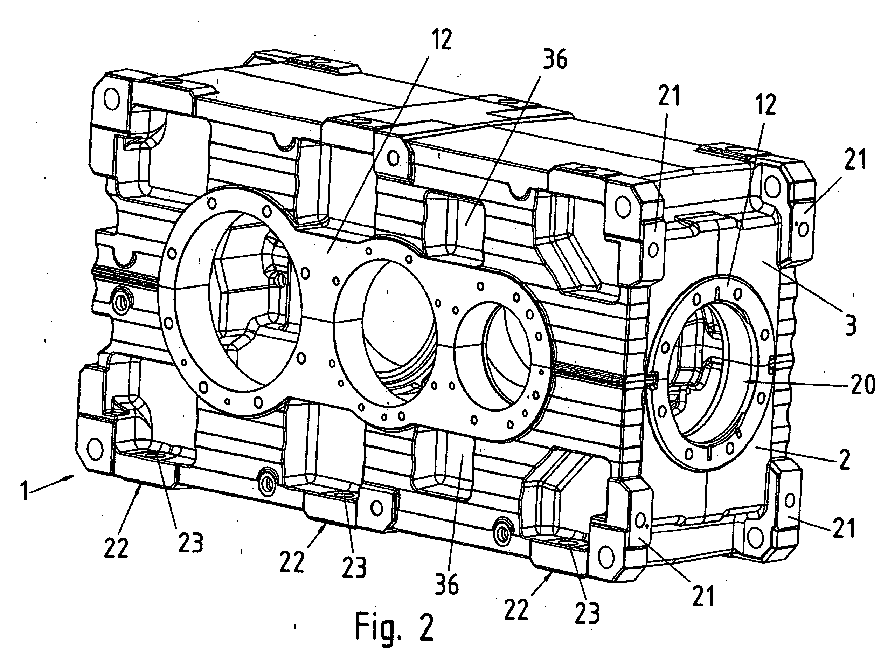

Figur 2 zeigt die Rückansicht des Getriebegehäuses 1. In der nun sichtbaren Seitenfläche ist eine Kegelradwellenbohrung 20 vorgesehen zur Aufnahme des Wellenlagers einer Kegelradstufe.

Die Seitenfläche weist an beiden Gehäuseschalen Flanschflächen 21 zur Montage der Lüfterhaube eines Getriebelüfters auf, der auf der eintreibenden Welle der Kegelradstufe montiert wird.

Flanschflächen 21 sind zusätzlich auf der von der Kegelradstufe abgewandten Seite vorgesehen zur Montage des Getriebegehäuses 1 in aufrechter Position, also in einer Bauform mit nach oben zeigender Kegelradwelle. Ebenso sind die Flanschflächen 21 der Kegelradseite zur Montage des Getriebegehäuses 1 in einer Bauform mit nach untern zeigender Kegelradwelle .verwendbar.

An der Unterseite der unteren Gehäuseschale 2 sind Fußflansche 22 ausgebildet zur Befestigung des Getriebegehäuses 1 auf einer Unterlage. Das Getriebegehäuse 1 wird mittels durch Befestigungsbohrlöcher 23 gesteckter Schrauben auf der Unterlage befestigt. Die obere Gehäuseschale 3 weist ebensolche Fußflansche 22 und Befestigungsbohrlöcher 23 auf, so dass zum einen das Getriebegehäuse 1 in umgekehrter Bauform, also Ausrichtung bezüglich des Schwerefeldes der Erde montierbar ist und zum anderen auf das Getriebegehäuse 1 weitere Vorrichtungen montierbar sind.

Bei einem weiteren Ausführungsbeispiel entfällt die Kegelradstufe, und die Kegelradwellenbohrung 20 ist mit einem Abschlussdeckel verschlossen.

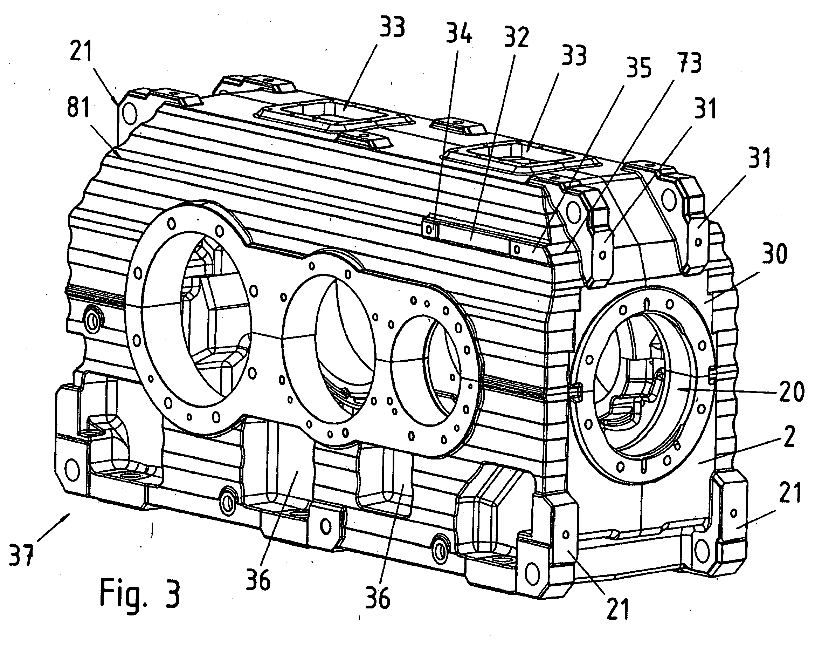

Figur 3 zeigt ein weiteres erfindungsgemäßes Ausführungsbeispiel eines Getriebegehäuses 37. Das Getriebegehäuse 37 umfasst die untere Gehäuseschale 2 aus Figur 1 und eine Gehäuseoberschale 30. Die Gehäuseoberschale 30 ist dachförmig zurückgenommen und weist daher eine Außenkontur auf, die sich aus der Außenkontur der unteren Gehäuseschale 2 ergibt, wenn deren Außenkanten schräg abgeschnitten werden. Somit ist eine Gehäuseschale bereitgestellt, die eine geringere Masse aufweist als die obere Gehäuseschale 3 aus Figur 1. Eine auf dem Kopf stehende Montage des Getriebegehäuses ist somit nicht möglich. In der Gehäuseoberschale 30 sind Inspektionsöffnungen 33 vorgesehen, die mit einem Deckel verschließbar sind. Die obere Gehäuseschale 3 aus Figur 1 weist keine derartige Inspektionsöffnung auf, weil diese sonst auch in der unteren Gehäuseschale 2 vorgesehen sein müsste, um identische Gusskörper verwenden zu können. Eine Inspektionsöffnung in der unteren Gehäuseschale würde aber erhebliche Dichtungsprobleme verursachen.

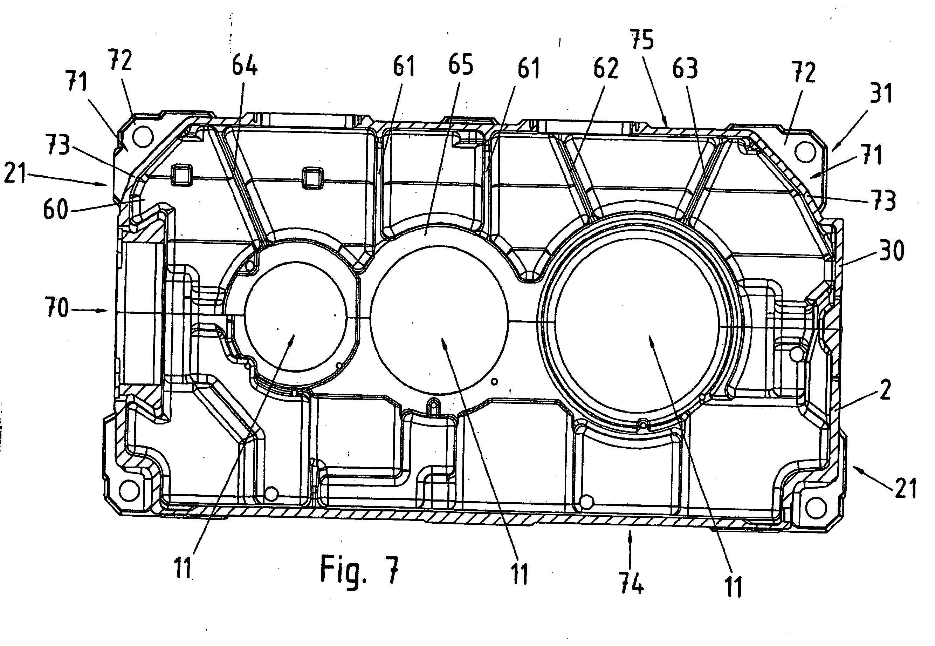

Die Gehäuseoberschale 30 weist an einer Seite eine Kegelradwellenbohrung 20 zur Montage einer Kegelradstufe auf. An dieser Seite sind Flanschflächen 31 vorgesehen, an die eine Lüfterhaube eines Getriebelüfters montierbar ist. Die Flanschflächen 31 sind, wie in Figur 7 ersichtlich, gegenüber den Flanschflächen 21 zurückgenommen. Hierdurch ist die Masse der Gehäuseoberschale 30 weiter verringert gegenüber der oberen Gehäuseschale 3 aus Figur 1. Eine Montage des Getriebegehäuses 37 mit nach unten zeigender Kegelradwelle ist aber nicht ohne Zwischenstücke möglich.

Die Gehäuseoberschale 30 weist an der der Kegelradseite gegenüberliegenden Seite Flanschflächen 21 auf zur Montage des Getriebegehäuses in einer Bauform mit nach oben zeigender Kegelradwelle.

Die Gehäuseoberschale 30 weist weiterhin eine Anschlussleiste 32 mit Montageflächen 34, 35 zur Montage eines Ölkühlers oder eines Ölfilters oder eines weiteren Zubehörteils auf.

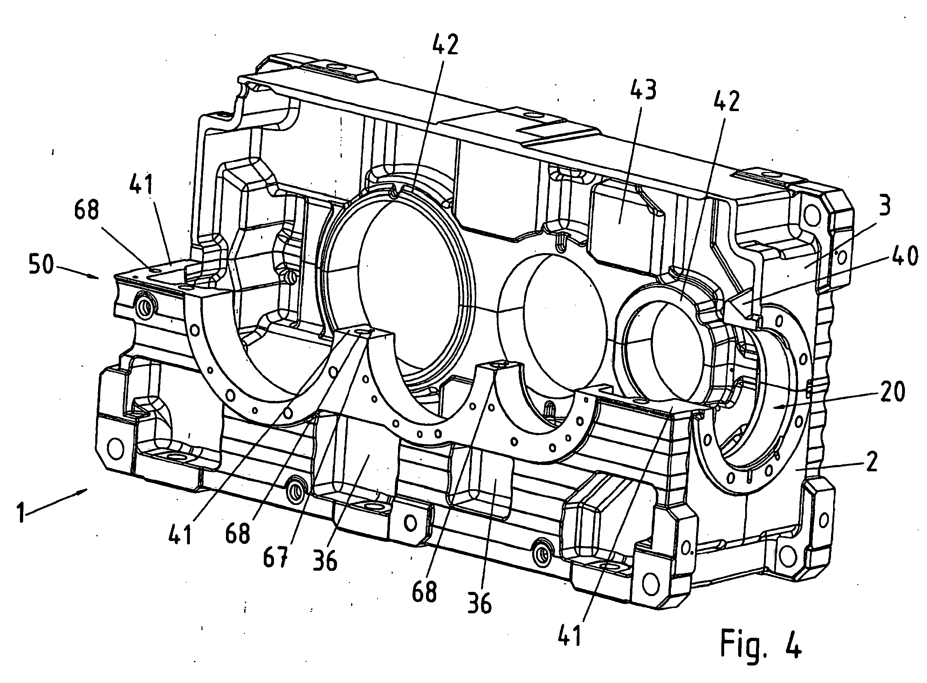

Figur 4 zeigt das Getriebegehäuse 1 mit aufgeschnittener oberer Gehäuseschale 3. Die Schnittstelle 50, über welche die obere Gehäuseschale 3 mit der unteren Gehäuseschale 2 verbunden ist, ist zumindest über die folgenden Merkmale definiert: Berührflächen 41 in unterer Gehäuseschale 2 und oberer Gehäuseschale 3, Stiftbohrungen 47 sowie Bolzenbohrungen 68.

Die Berührflächen 41 ermöglichen einen dichten Abschluss des Getriebeinneren. Die Stiftbohrungen 47 sind für Zentrierstifte vorgesehen, die über eine Presspassung in die Stiftbohrungen 47 eingebracht werden. Die Zentrierstifte stellen somit Zentriermittel dar, die eine Verformung der Getriebeschalen 2, 3 nach Einbringen der Lagerbohrungen 11 verhindern.

Die Bolzenbohrungen 68 dienen der Aufnahme von Gewindebolzen zur festen, lösbaren Verbindung der Gehäuseschalen. In der unteren Gehäuseschale 2 münden die Bolzenbohrungen 68 in Taschen 36, durch welche die Gewindebolzen einführbar sind. In der oberen Gehäuseschale 3 sind an entsprechenden Stellen Bolzenbohrungen als Sacklochbohrungen eingebracht, die nicht in Taschen münden sondern verschlossen sind. Somit werden von oben fließende Flüssigkeiten von den Bolzenbohrungen 68 ferngehalten.

Die Berandungen der Lagerbohrungen 11 sind in allen Gehäuseschalen durch Lageraufdickungen 42 verstärkt. Diese Lageraufdickungen 42 weisen nach innen und stehen also über die Innenwand der Gehäuseschalen 2, 3 hinaus ins Innere, abgesehen von Bereichen, in denen Taschenrückwände dieses Überstehen kompensieren.

Die obere Gehäuseschale 3 weist an der Kegelradwellenbohrung 20 eine Ölfangtasche 40 auf, die rinnenförmig nach oben weist und über die Öl aus dem Innenraum gesammelt und in eine am tiefsten Punkt der Ölfangtasche 40 vorgesehene Bohrung geleitet wird. Diese Bohrung versorgt des Lager der Kegelradstufe mit Öl. Da obere Gehäuseschale 3 und untere Gehäuseschale 2 aus identischen Gussteilen gefertigt sind, weist die untere Gehäuseschale 2 eine ebensolche Ölfangtasche auf, die von der Ölfangtasche 40 weg und nach unten weist. Diese Ölfangtasche ist wegen der Bauform des Getriebegehäuses 1 ohne Funktion.

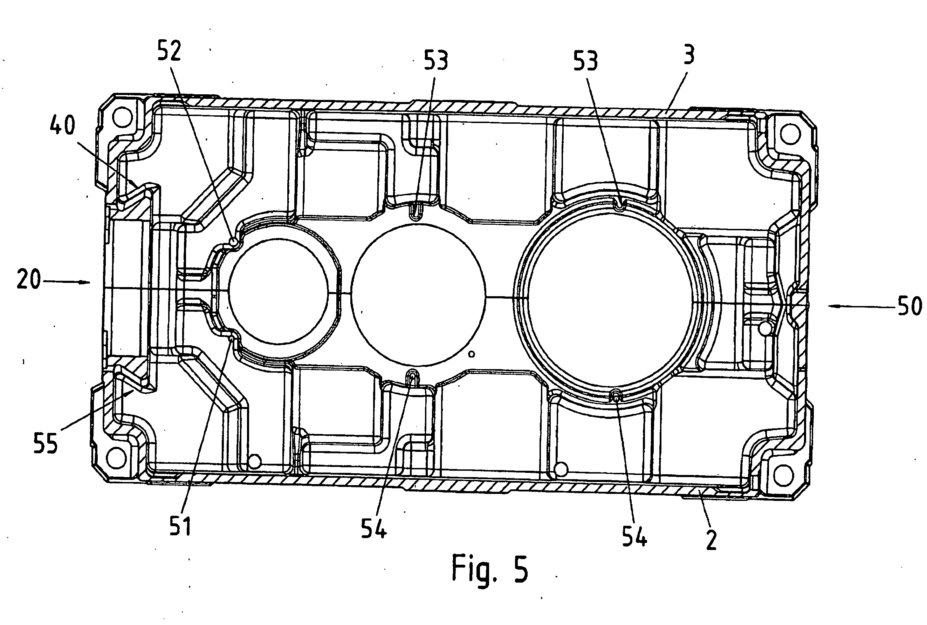

Figur 5 zeigt einen Schnitt durch das Getriebegehäuse 1 entlang einer vertikalen Ebene, die durch die Kegelradwellenbohrung 20 verläuft.

In der Wand der oberen Gehäuseschale 3 sind Ausnehmungen 53 vorgesehen. In der unteren Gehäuseschale 2 sind ebensolche Ausnehmungen vorgesehen, in die Ölrücklaufbohrungen 54 eingebracht sind. Die obere Gehäuseschale 3 weist weiterhin eine Bohrung für einen Sauganschluss 52 auf, während die untere Gehäuseschale 2 eine Bohrung für einen Druckanschluss 51 aufweist. Beide Anschlüsse 51, 52 dienen zum Anschluss einer optionalen Wellenendpumpe und weisen funktionsbedingt unterschiedliche Durchmesser auf.

In der Schnittansicht ist die Ölfangtasche 40 ersichtlich sowie die funktionslose Ölfangtasche 55, deren Sammelöffnung von der Sammelöffnung der Ölfangtasche 40 weg und nach unten weist. Durch diese Anordnung der Ölfangtasche 55 ist kein Sammeln von Öl in der gezeigten Bauform möglich. Die Ölfangtasche 55 ist lediglich ausgebildet, weil die Gusskörper der beiden Gehäuseschalen identisch sind.

Durch die identische Ausbildung ist ein Teilereduktion in einem Baukasten für Getriebegehäuse ermöglicht.

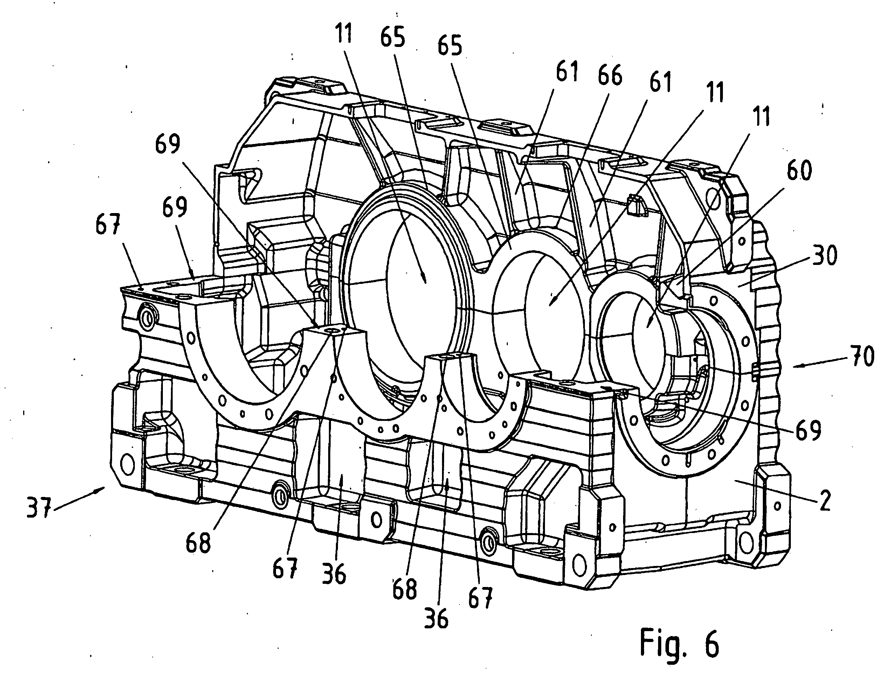

Figur 6 zeigt das Getriebegehäuse 37 aus Figur 3 mit aufgeschnittener Gehäuseoberschale 30. Die Schnittstelle 70, über welche die Gehäuseoberschale 30 mit der unteren Gehäuseschale 2 verbunden ist, ist zumindest über die folgenden Merkmale definiert: Berührflächen 69 in unterer Gehäuseschale 2 und Gehäuseoberschale 30, Stiftbohrungen 67 sowie Bolzenbohrungen 68.

Die Berührflächen 69 bewirken einen dichten Abschluss des Getriebeinneren. Die Stiftbohrungen 67 sind für Zentrierstifte vorgesehen, die über eine Presspassung in die Stiftbohrungen 67 eingebracht werden. Die Zentrierstifte stellen somit Zentriermittel dar, die eine Verformung der Getriebeschalen 2, 30 nach Einbringen der Lagerbohrungen 11 verhindern.

Die Bolzenbohrungen 68 dienen der Aufnahme von Gewindebolzen zur festen, lösbaren Verbindung der Gehäuseschalen. In der unteren Gehäuseschale 2 münden die Bolzenbohrungen 68 in Taschen 36, durch welche die Gewindebolzen einführbar sind. In der Gehäuseoberschale 30 sind an entsprechenden Stellen Bolzenbohrungen als Sacklochbohrungen eingebracht, die nicht in Taschen münden sondern verschlossen sind. Somit werden von oben fließende Flüssigkeiten von den Bolzenbohrungen 68 ferngehalten.

Die Berandungen der Lagerbohrungen 11 sind in allen Gehäuseschalen durch Lageraufdickungen 65 verstärkt. Diese Lageraufdickungen 65 weisen nach innen und stehen also über die Innenwand der Gehäuseoberschale 30 hinaus ins Innere. Von den Lageraufdickungen 65 ausgehend erstrecken sich an der Innenwand der Gehäuseoberschale 30 Verstärkungsrippen 61 zur Verstärkung der Gehäusewandung.

Die Gehäuseoberschale 30 weist an der Kegelradwellenbohrung 20 eine Ölfangtasche 60 auf, die rinnenförmig nach oben weist und über die Öl aus dem Innenraum gesammelt und in eine am tiefsten Punkt der Ölfangtasche 60 vorgesehene Bohrung geleitet wird. Diese Bohrung versorgt des Lager der Kegelradstufe mit Öl. Die untere Gehäuseschale 2 weist eine ebensolche Ölfangtasche auf, die von der Ölfangtasche 60 weg und nach unten weist. Diese Ölfangtasche ist wegen der Bauform des Getriebegehäuses 37 ohne Funktion.

Figur 7 zeigt einen Schnitt durch das Getriebegehäuse 37 entlang einer vertikalen Ebene, die durch die Kegelradwellenbohrung 20 verläuft.

An der Getriebeoberschale 30 sind Verstärkungsrippen 61 vorgesehen, die an der Lageraufdickung 65 der mittleren Lagerbohrung beginnen und sich nach vertikal nach oben erstrecken. An den seitlichen Lagerbohrungen 11 sind Verstärkungsrippen 62, 63 und 64 vorgesehen, die sich von der jeweiligen Lagerbohrung 11 in radialer Richtung nach oben erstrecken. Durch die Verstärkungsrippen 61, 62, 63, 64 ist die Wandstärke der Gehäuseoberschale 30 gegenüber der Wandstärke der unteren Gehäuseschale 2 reduziert, insbesondere an dem mit 75 bezeichneten Bereich der Oberseite im Vergleich zu dem mit 74 bezeichneten Bereich der Unterseite des Getriebegehäuses 37, sowie in weiteren in der Figur 7 ersichtlichen Bereichen. Durch die verminderte Wandstärke ist die Masse der Gehäuseoberschale 30 im Vergleich zu der oberen Gehäuseschale 3 nochmals reduzierbar.

Die Außenkontur der Gehäuseoberschale 30 ist im Bereich 71, also im Bereich der Ohren 72 zum Abheben der Gehäuseoberschale 30, dachförmig zurückgenommen zur Massenreduktion. In diesen zurückgenommenen Bereichen 71 sind Knicke 73 vorgesehen, so dass sich insgesamt für die Außenkontur der Gehäuseoberschale die Form eines Mansarddachs ergibt.

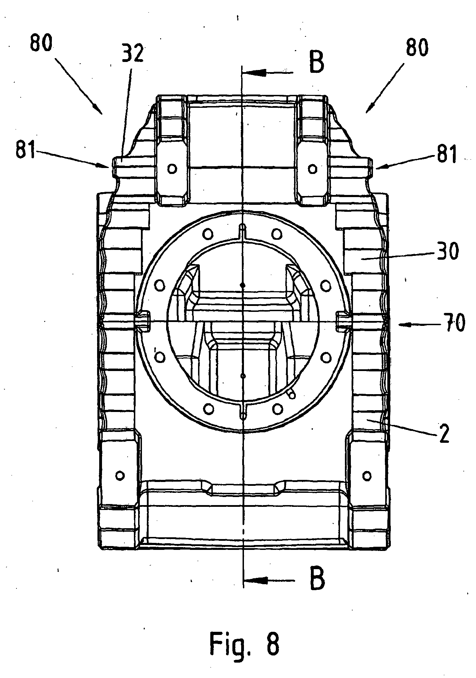

Figur 8 zeigt die Seitenansicht der Kegelradseite des Getriebegehäuses 37 aus Figur 3. Deutlich ist die dachförmige Ausbildung der Außenkontur der Gehäuseoberschale 30 ersichtlich, die durch Wegschneiden von Kanten 80 gegenüber der quaderförmigen Außenkontur der unteren Gehäuseschale 2 entsteht. Durch Knicke 81 in Höhe der Anschlussleiste 32 ergibt sich die Form eines Mansarddachs mit zwei Bereichen unterschiedlicher Neigung. Durch das Wegschneiden der Kanten an allen vier Seiten ergibt sich die Form eines oben abgeflachten Mansard-Walmdachs mit Schrägen auf allen vier Seiten mit jeweils zwei Bereichen unterschiedlicher Neigung.

Durch die Ausbildung der unteren Gehäuseschale 2, insbesondere durch die Ausbildung der Schnittstelle 50 sowie die Ausbildung von Ölfangtaschen 55 ist eine Baureihe von Getriebegehäusen bereitgestellt, bei der eine schwere Variante bildbar ist aus zwei identischen Gusskörpern, die eine stabile Montage in allen Bauformen erlaubt, und eine leichte Variante bildbar ist, wobei insgesamt nur zwei verschiedene Bauteile eines Baukastens benötigt werden.

Bei einem weiteren Ausführungsbeispiel ist das Gehäuse eines Getriebes gebildet, indem zwei Gehäuseoberschalen, die jeweils identisch zu der in den Figuren 3 und 6 bis 8 gezeigten Gehäuseoberschale 30 ausgebildet sind, mit ihren Verbindungsflanschen 41 aufeinander gesetzt werden. Die Verstärkungsrippen 61 im Inneren bieten eine hinreichende Stabilität des Gehäuses für viele Anwendungen.

Die den Bolzenbohrungen 68 in Figur 6 entsprechenden Bolzenbohrungen sind zumindest an einer der zwei Gehäuseoberschalen nach außen durchgeführt, um ein Einstecken von Verbindungsschrauben oder Verbindungsbolzen von außen bei zusammengesetzten Gehäuseoberschalen zu ermöglichen.

Je nach Einbaulage des Getriebes sind die Inspektionsöffnungen 33 in eine oder beide Gehäuseoberschalen eingebracht oder nicht.

Das so hergestellte Getriebegehäuse weist eine besonders geringe Masse auf und ist für den Einbau in beengte räumliche Verhältnisse geeignet. Eine sichere Montage und Befestigung ist trotz zur Gewichtsreduzierung fehlender Auflagefläche durch die Ohren 72 möglich.

Insgesamt bilden dieses Ausführungsbeispiel zum Ersten, das Ausführungsbeispiel gemäß Figuren 1, 2, 4, 5 zum Zweiten und das Ausführungsbeispiel gemäß Figuren 3, 6-8 zum Dritten somit drei unterschiedliche Varianten einer Baureihe von Getriebegehäuse und letztlich Getrieben, wobei die Varianten aus einem Baukasten zusammensetzbar sind, der nur zwei verschiedene Gehäuseteile, nämlich die Gehäuseschale 2 gemäß Figur 1 und die Gehäuseoberschale 30 gemäß Figur 3, wenn auch in mehreren Kopien, umfasst. Je nach Anwendungsanforderungen, beispielsweise bezüglich Masse, Baumaß und Belastbarkeit, kann somit zwischen drei Gehäusevarianten gewählt werden, die identische Innereien, also zumindest eine Getriebestufe, gehäusebildend aufnehmen.

Bei Varianten einer Getriebebaureihe werden somit Gehäuse aus Gehäuseschalen zusammengesetzt, wobei in einer Variante die Gehäuseschalen aus einem identischen Gusskörper gefertigt sind, in einer zweiten, gewichtsreduzierten Variante die Gehäuseschalen aus unterschiedlichen Gusskörpern gefertigt sind und in einer dritten, nochmals gewichtsreduzierten Variante die Gehäuseschalen aus identischen Gusskörpern gefertigt sind, die dem gewichtsreduzierten der Gusskörper der zweiten Variante gleichen.

## Patentansprüche

1. Gehäuse (1) für ein Getriebe,
wobei das Gehäuse (1) aus einer Gehäuseunterschale (2, 3) als untere Gehäuseschale und einer Gehäuseoberschale (30) als obere Gehäuseschale zusammengesetzt ist, wobei die untere Gehäuseschale (2, 3) Fußflansche und Befestigungsbohrlöcher zur Montage des Getriebes auf einer Unterlage aufweist,
und mit einer Schnittstelle (50, 70) zur Verbindung der Gehäuseschalen (2, 3, 30), wobei die an der Gehäuseunterschale (2, 3) ausgebildeten Merkmale der Schnittstelle (50, 70), insbesondere Bohrlöcher, Berührflächen und Zentrierhilfen, identisch ausgeformt sind zu den an der Gehäuseoberschale (30) ausgebildeten Merkmalen der Schnittstelle,
so dass die Gehäuseunterschale (2, 3) statt mit der Gehäuseoberschale (30) alternativ auch mit einer Kopie der Gehäuseunterschale (2, 3) über die Schnittstelle (50, 70) zur Bildung einer Gehäusevariante verbindbar ist, **dadurch gekennzeichnet daß** die Gehäuseoberschale (30) aus einem Gussteil gefertigt ist, das eine gegenüber dem Gussteil der Gehäuseunterschale (2, 3) verringerte Masse aufweist,
wobei die Massenreduktion durch eine dünnere Wandstärke der Gehäuseoberschale (30) gegenüber der Wandstärke der Gehäuseunterschale (2, 3) bewirkt ist.

2. Gehäuse (1) nach dem vorangegangenen Anspruch,
**dadurch gekennzeichnet, dass**
eine Kegelradstufe vorgesehen ist,
wobei Teilbereiche der Lagerbohrung (20) für die Kegelradwelle in beiden Gehäuseschalen (2, 3) vorgesehen sind
und/oder eine Ölfangtasche (40, 60) in der unteren Gehäuseschale (2, 3) vorgesehen ist, insbesondere einstückig mit ihr ausgeformt ist,
und/oder Ölfangtaschen (40, 60) in den Gehäuseschalen (2, 3, 30) derart vorgesehen sind, dass die jeweiligen Auffangöffnungen voneinander weg weisen.

3. Gehäuse (1) nach einem der vorangegangenen Ansprüche,
**dadurch gekennzeichnet, dass**
die untere Gehäuseschale (2, 3) eine quaderförmige Außenform aufweist und die obere Gehäuseschale (30) eine Außenform aufweist, die aus der unteren Gehäuseschale (2, 3) durch Wegschneiden von Kanten (71) entsteht.

4. Gehäuse (1) nach einem der vorangegangenen Ansprüche,
**dadurch gekennzeichnet, dass**
Lageraufdickungen (42, 65) zur Verstärkung der Wellenlagerbohrungen vorgesehen sind und/oder
die Lageraufdickungen (42, 65) in das Getriebeinnere weisen
und/oder
die obere Gehäuseschale (30) auf der Innenseite Verstärkungsrippen (61, 62, 63, 64) aufweist, die von den Lageraufdickungen (42, 65) weg verlaufen.

5. Gehäuse (1) nach einem der vorangegangenen Ansprüche,
**dadurch gekennzeichnet, dass**
obere und untere Gehäuseschalen (2, 3, 30) identische Zentriermittel (67) aufweisen, wobei die Zentrierung durch Zwischenteile und/oder weitere Zentriermittel vorgesehen ist.

6. Gehäuse (1) nach einem der vorangegangenen Ansprüche,
**dadurch gekennzeichnet, dass**
in der Berührfläche in der oberen Gehäuseschale (30) und in der unteren Gehäuseschale (2, 3) Stiftbohrungen (67) vorgesehen sind
und dass mit der unteren Gehäuseschale (2, 3) durch Zentrierstifte verbunden sind, die über eine Presspassung in den Stiftbohrungen (67) sitzen
und/oder
die obere Gehäuseschale (30) mit der unteren Gehäuseschale (2, 3) durch Gewindebolzen verbunden ist, wobei jeder Gewindebolzen durch eine Bohrung (68) in der unteren Gehäuseschale (2, 3) geführt ist und in ein Sackloch (6) der oberen Gehäuseschale (30) eingeschraubt ist
und/oder
die obere Gehäuseschale (30) eine Anschlussleiste für einen Ölkühler und/oder einen Ölfilter und/oder eine Lüfterhaube aufweist.

7. Getriebe (1) mit einem wenigstens eine Getriebestufe aufnehmenden Gehäuse (1)
**dadurch gekennzeichnet, dass**
das Gehäuse (1) nach einem der vorangegangenen Ansprüche ausgestaltet ist.

8. Getriebe-Baureihe,
umfassend Varianten, die jeweils ein Gehäuse (1) aufweisen, wobei in einer ersten Variante das Gehäuse (1) aus zwei Gehäuseschalen (2, 3) zusammengesetzt ist, die aus identischen Gussteilen gefertigt sind, insbesondere durch Bohrbearbeitung,
und in einer zweiten Variante das Gehäuse (1) aus einer Gehäuseunterschale (2, 3) als untere Gehäuseschale und einer Gehäuseoberschale (30) als obere Gehäuseschale zusammengesetzt ist,
wobei die Gehäuseunterschale (2, 3) aus einem zum Gussteil der Gehäuseschale (2, 3) der ersten Variante identischen Gussteil gefertigt ist
und die Gehäuseoberschale (30) aus einem Gussteil gefertigt ist, das eine gegenüber dem Gussteil der ersten Variante verringerte Masse aufweist,
wobei die Massenreduktion durch eine dünnere Wandstärke (75) der Gehäuseoberschale (30) gegenüber der Wandstärke (74) der Gehäuseunterschale (2, 3) bewirkt ist

9. Getriebe-Baureihe nach Anspruch 8,
**dadurch gekennzeichnet, dass**
die Massenreduktion durch eine verkleinerte äußere Oberfläche der oberen Gehäuseschale (30) gegenüber der äußeren Oberfläche der unteren Gehäuseschale (2, 3) bewirkt ist,
insbesondere wobei in jeder Variante in der oberen Gehäuseschale (30) Sacklöcher (6) für Verbindungsbolzen eingebracht sind und in der unteren Gehäuseschale (2, 3) durchgehende Bohrlöcher (68) vorgesehen sind zur Durchführung der Verbindungsbolzen.

10. Getriebe-Baureihe nach einem der Ansprüche 8 oder 9,
**dadurch gekennzeichnet, dass**
in einer dritten Variante das Gehäuse (1) aus zwei Gehäuseschalen zusammengesetzt ist,
die aus identischen Gussteilen gefertigt sind, insbesondere durch Bohrbearbeitung, wobei die Gussteile identisch zum Gussteil der Gehäuseoberschale der zweiten Variante sind.

11. Getriebe-Baureihe nach einem der Ansprüche 8 bis 10,
**dadurch gekennzeichnet, dass**
obere Gehäuseschale (30) und untere Gehäuseschale (2, 3) ein Gehäuse (1) nach einem der vorangegangenen Ansprüche 1 - 6 bilden.

## Claims

1. Gearbox housing (1), the housing (1) being composed of a housing bottom shell (2, 3) as bottom housing shell and a housing top shell (30) as top housing shell, the bottom housing shell (2, 3) having bottom flanges and securing boreholes for mounting the gearbox on a base, and being provided with an interface (50, 70) for connecting the housing shells (2, 3, 30), the features of the interface (50, 70), in particular boreholes, contact surfaces and centring aids, which are formed on the housing bottom shell (2, 3) being formed in an identical manner to the features of the interface formed on the housing top shell (30), so that the housing bottom shell (2, 3), in order to form a housing variant, can be connected alternatively also to a duplicate of the housing bottom shell (2, 3) via the interface (50, 70), instead of to the housing top shell (30), **characterized in that** the housing top shell (30) is made from a cast part which has a reduced mass compared to the cast part of the housing bottom shell (2, 3), the reduction in mass being achieved by providing a wall thickness of the housing top shell (30) thinner than the wall thickness of the housing bottom shell (2, 3).

2. Housing (1) according to the preceding claim, **characterized in that** a bevel gear stage is provided, partial zones of the bearing bore (20) being provided for the bevel gear shaft in both housing shells (2, 3), and/or an oil collection pocket (40, 60) is provided in the bottom housing shell (2, 3), in particular formed integrally therewith, and/or oil collection pockets (40, 60) are provided in the housing shells (2, 3, 30) in such a way that the respective collection openings are directed away from each other.

3. Housing (1) according to one of the preceding claims, **characterized in that** the bottom housing shell (2, 3) has a square-shaped outer form and the top housing shell (30) has an outer form which is obtained from the bottom housing shell (2, 3) by cutting off edges (71).

4. Housing (1) according to one of the preceding claims, **characterized in that** bearing thickened portions (42, 65) are provided for strengthening the shaft bearing bores, and/or the bearing thickened portions (42, 65) are directed towards the inside of the gearbox, and/or the top housing shell (30) has on the inner side reinforcing ribs (61, 62, 63, 64) which extend away from the bearing thickened portions (42, 65).

5. Housing (1) according to one of the preceding claims, **characterized in that** top and bottom housing shells (2, 3, 30) have identical centring means (67), the centring being provided by means of intermediate parts and/or further centring means.

6. Housing (1) according to one of the preceding claims, **characterized in that** pin holes (67) are provided in the contact surface in the top housing shell (30) and in the bottom housing shell (2, 3) and **in that** they are connected to the bottom housing shell (2, 3) by means of centring pins which are seated via a press fit in the pin holes (67), and/or the top housing shell (30) is connected to the bottom housing shell (2, 3) by means of threaded bolts, each threaded bolt being guided by means of a bore (68) in the bottom housing shell (2, 3) and being screwed into a blind hole (6) of the top housing shell (30), and/or the top housing shell has a connecting strip for an oil cooler and/or an oil filter and/or a ventilation hood.

7. Gearbox (1) with at least one housing (1) receiving a gearbox stage, **characterized in that** the housing (1) is configured according to one of the preceding claims.

8. Gearbox series, comprising variants which in each case have a housing (1), in a first variant the housing (1) being composed of two housing shells (2, 3) which are made from identical cast parts, in particular by means of bore machining, and in a second variant the housing (1) being composed of a housing bottom shell (2, 3) as bottom housing shell and a housing top shell (30) as top housing shell, the housing bottom shell (2, 3) being made from a cast part identical to the cast part of the housing shell (2, 3) of the first variant, and the housing top shell (30) being made from a cast part which has a reduced mass compared to the cast part of the first variant, the reduction in mass being achieved by providing a wall thickness (75) of the housing top shell (30) thinner than the wall thickness (74) of the housing bottom shell (2, 3).

9. Gearbox series according to Claim 8, **characterized in that** the reduction in mass is achieved by providing an outer surface of the top housing shell (30) smaller the outer surface of the bottom housing shell (2, 3), in particular in each variant blind holes (6) for connecting bolts being formed in the top housing shell (30) and through-boreholes (68) being provided in the bottom housing shell (2, 3) for receiving the connecting bolts.

10. Gearbox series according to one of Claims 8 or 9, **characterized in that** in a third variant the housing (1) is composed of two housing shells which are made from identical cast parts, in particular by means of bore machining, the cast parts being identical to the cast part of the housing top shell of the second variant.

11. Gearbox series according to one of Claims 8 to 10, **characterized in that** the top housing shell (30) and bottom housing shell (2, 3) form a housing (1) according to one of the preceding Claims 1-6.

## Revendications

1. Carter (1) pour boîte de vitesses,
ledit carter (1) étant composé d'une coque inférieure (2, 3) matérialisant une coque inférieure d'enveloppement, et d'une coque supérieure (30) matérialisant une coque supérieure d'enveloppement,
ladite coque inférieure (2, 3) du carter présentant des brides d'embase et des perçages de fixation, en vue du montage de la boîte de vitesses sur une structure sous-jacente,
et étant pourvu d'une zone d'interface (50, 70) dévolue à la liaison desdites coques (2, 3, 30) du carter,
sachant que les caractéristiques dont ladite zone d'interface (50, 70) est dotée, sur la coque inférieure (2, 3) du carter, se présentant en particulier comme des perçages, des surfaces de contact et des auxiliaires de centrage, sont de configuration identique à celle des caractéristiques dont ladite zone d'interface est dotée sur la coque supérieure (30) dudit carter,
de sorte qu'au lieu d'être reliée à la coque supérieure (30) du carter, la coque inférieure (2, 3) dudit carter peut aussi, sélectivement, être reliée à un modèle reproduit de ladite coque inférieure (2, 3) du carter, par l'intermédiaire de ladite zone d'interface (50, 70), afin de constituer une variante de carter,
**caractérisé par le fait que**
la coque supérieure (30) du carter se présente comme une pièce coulée offrant une masse réduite par rapport à la pièce coulée constituant la coque inférieure (2, 3) dudit carter,
la réduction de masse découlant du fait que ladite coque supérieure (30) du carter présente une épaisseur de paroi moindre que l'épaisseur de paroi de ladite coque inférieure (2, 3) dudit carter.

2. Carter (1) selon la revendication précédente,
**caractérisé par**
la présence d'un engrenage conique,
des régions partielles de l'alésage de portée (20), dévolu à l'arbre dudit engrenage conique, étant prévues dans les deux coques (2, 3) du carter,
et/ou une poche (40, 60) de recueil d'huile étant prévue dans la coque inférieure (2, 3) dudit carter, avec laquelle elle est notamment ménagée d'un seul tenant,
et/ou des poches (40, 60) de recueil d'huile étant prévues, dans les coques (2, 3, 30) dudit carter, de façon telle que les orifices collecteurs respectifs pointent mutuellement à l'opposé.

3. Carter (1) selon l'une des revendications précédentes,
**caractérisé par le fait que**
la coque inférieure (2, 3) du carter présente une forme extérieure parallélépipédique,
et la coque supérieure (30) dudit carter offre une forme extérieure obtenue à partir de ladite coque inférieure (2, 3) du carter, par rognage d'arêtes (71).

4. Carter (1) selon l'une des revendications précédentes,
**caractérisé par le fait que**
des renflements de montage (42, 65) sont prévus pour renforcer les alésages de portée d'arbres,
et/ou
lesdits renflements de montage (42, 65) pointent vers l'espace interne de la boîte de vitesses,
et/ou la coque supérieure (30) du carter comporte, sur la face intérieure, des nervures de renforcement (61, 62, 63, 64) qui s'étendent à partir desdits renflements de montage (42, 65).

5. Carter (1) selon l'une des revendications précédentes,
**caractérisé par le fait que**
les coques inférieure et supérieure (2, 3, 30) dudit carter sont équipées de moyens de centrage (67) identiques, le centrage étant instauré par des pièces intercalaires et/ou par des moyens supplémentaires de centrage.

6. Carter (1) selon l'une des revendications précédentes,
**caractérisé par le fait que**
des perçages d'emboîtement (67) sont prévus, dans la surface de contact, dans la coque supérieure (30) du carter et dans la coque inférieure (2, 3) dudit carter,
et que des tenons de centrage, reliés à ladite coque inférieure (2, 3) du carter, sont logés dans lesdits perçages d'emboîtement (67) par ajustement serré,
et/ou
la coque supérieure (30) du carter est reliée à la coque inférieure (2, 3) dudit carter par l'intermédiaire d'axes filetés, chaque axe fileté étant guidé par un alésage (68) pratiqué dans ladite coque inférieure (2, 3) dudit carter, et étant vissé dans un trou borgne (6) de ladite coque supérieure (30) dudit carter,
et/ou
ladite coque supérieure (30) du carter présente une barrette de rattachement destinée à un refroidisseur d'huile et/ou à un filtre à huile et/ou à un manchon de ventilateur.

7. Boîte de vitesses munie d'un carter (1) renfermant au moins un étage de ladite boîte,
**caractérisée par le fait que**
ledit carter (1) est réalisé conformément à l'une des revendications précédentes.

8. Gamme de boîtes de vitesses
incluant des variantes respectivement pourvues d'un carter (1), sachant que,
dans une première variante, ledit carter (1) est composé de deux coques (2, 3) produites à partir de pièces coulées identiques, notamment par des opérations d'alésage, et, dans une deuxième variante, ledit carter (1) est composé d'une coque inférieure (2, 3) matérialisant une coque inférieure d'enveloppement, et d'une coque supérieure (30) matérialisant une coque supérieure d'enveloppement,
ladite coque inférieure (2, 3) du carter étant produite à partir d'une pièce coulée identique à la pièce coulée de la coque (2, 3) du carter selon la première variante,
et ladite coque supérieure (30) du carter étant produite à partir d'une pièce coulée offrant une masse réduite par rapport à la pièce coulée de la première variante,
la réduction de masse découlant du fait que ladite coque supérieure (30) du carter présente une épaisseur de paroi (75) moindre que l'épaisseur de paroi (74) de ladite coque inférieure (2, 3) dudit carter.

9. Gamme de boîtes de vitesses, selon la revendication 8,
**caractérisée par le fait que**
la réduction de masse découle du fait que la coque supérieure (30) du carter présente une surface extérieure diminuée par rapport à la surface extérieure de la coque inférieure (2, 3) dudit carter,
sachant notamment que, dans chaque variante, des trous borgnes (6) dédiés à des axes filetés de liaison sont pratiqués dans ladite coque supérieure (30) du carter et que des perçages traversants (68), dévolus au passage desdits axes filetés de liaison, sont prévus dans ladite coque inférieure (2, 3) dudit carter.

10. Gamme de boîtes de vitesses, selon l'une des revendications 8 ou 9,
**caractérisée par le fait que**,
dans une troisième variante, le carter (1) est composé de deux coques produites à partir de pièces coulées identiques, notamment par des opérations d'alésage,
lesdites pièces coulées étant identiques à la pièce coulée de la coque supérieure du carter selon la deuxième variante.

11. Gamme de boîtes de vitesses, selon l'une des revendications 8 à 10,
**caractérisée par le fait que**
la coque supérieure (30) de carter et la coque inférieure (2, 3) de carter forment un carter (1) selon l'une des revendications 1-8 précédentes, et/ou forment un carter (1) produit selon l'une des revendications 10 ou 11 qui précèdent.
